**Europäisches Patentamt**

**European Patent Office**

**Office européen des brevets**

(19)

(11) Veröffentlichungsnummer: **0 124 031**
**B1**

## (12) EUROPÄISCHE PATENTSCHRIFT

(45) Veröffentlichungstag der Patentschrift:
**26.08.87**

(21) Anmeldenummer: **84104427.4**

(22) Anmeldetag: **18.04.84**

(51) Int. Cl.⁴: **H 04 L 27/04**

(54) **Verfahren zur digitalen Quadraturamplitudenmodulation.**

(30) Priorität: **22.04.83 DE 3314603**

(43) Veröffentlichungstag der Anmeldung:
**07.11.84 Patentblatt 84/45**

(45) Bekanntmachung des Hinweises auf die Patenterteilung:
**26.08.87 Patentblatt 87/35**

(84) Benannte Vertragsstaaten:
**DE FR IT**

(56) Entgegenhaltungen:
**US - A - 4 003 002**

**1978 NATIONAL TELECOMMUNICATIONS
CONFERENCE RECORD, Band 3, Dezember 1978,
Seiten 46.6.1 - 46.6.4, New York, USA; A. TANNHÄUSER
et al.: "Aspects of digital signal processing in voice
band modems"**

(73) Patentinhaber: **Siemens Aktiengesellschaft Berlin und
München, Wittelsbacherplatz 2, D-8000 München 2 (DE)**

(72) Erfinder: **Nossek, Josef, Dr., Waldstrasse 17,
D-8127 Iffeldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur digitalen Quadraturamplitudenmodulation unter Verwendung von spektrumformenden digitalen Filtern, bei der Abtastfolgen aus zwei unter 90° aufeinander stehenden Trägerschwingungen ein Viertel der Abtastfrequenz ist und ihre Phasenlage relativ zu den Abtastzeitpunkten so gewählt ist, dass abwechselnd jeder zweite Abtastwert beider Trägerschwingungen Null ist, derart, dass zu jedem Taktzeitpunkt jeweils eine der beiden Trägerschwingungen Null ist.

Verfahren der vorgenannten Art sind aus der Zeitschrift «National Telecommunications Conference Record», 1978, Bd. 3, S. 46.6.1–46.6.4, bekannt.

Weiterhin sind Verfahren zur digitalen Quadraturamplitudenmodulation (QAM) dem Grundkonzept nach durch die Literaturstelle NTG Fachberichte (1980), Seiten 81 bis 85, bekanntgeworden. Es werden in dieser Literaturstelle auch digitale, spektrumformende Tiefpässe verwendet, anschliessend erfolgt die Digital-Analog-Wandlung, und die Quadraturamplitudenmodulation erfolgt analog. Entsprechend gilt dies auch für den Empfangsweg.

Zu bedenken ist ferner, dass zur Lösung einer Reihe nachrichtentechnischer Probleme Schaltungen erforderlich sind, die die sogenannte Nyquist-Bedingung erfüllen. Diese Bedingung ist an sich definiert, zugehörige Schaltungen werden beispielsweise dann benötigt, wenn es darauf ankommt, Impulse intersymbolstörungsfrei (d.h. ohne Impulsnebensprechen) zu übertragen bzw. Videofrequenzbänder umzusetzen, wobei die Frequenz Null und ein Restseitenband noch übertragen werden muss. Selektionsmittel zur Lösung dieser Aufgabe stehen ebenfalls zur Verfügung. Beispielsweise in der Zeitschrift «Frequenz» 1973, Band 27, Seiten 2 bis 6, werden für die Verarbeitung analoger Signale Möglichkeiten zur Synthese von Nyquist-Filtern angegeben. Im Grundkonzept laufen diese Schaltungen darauf hinaus, sogenannte strenge Frequenzweichen zu realisieren, bei denen Filter mit einer sogenannten selbstreziproken charakteristischen Funktion verwendet sind. Inzwischen wird auch die sogenannte digitale Technik bei Nachrichtenübermittlungssystemen eingesetzt, und es steht somit auch das Problem an, hierfür Selektionsmittel zu schaffen, Schaltungen und Netzwerke also, für die sich der Ausdruck «digitale Filter» eingebürgert hat. Beispielsweise sind Möglichkeiten zur Realisierung solcher digitalen Filter recht allgemein in dem Buch von Temes/Mitra «Modern Filter Theory and Design» (Verlag John Wiley & Sons, 1973) angegeben und dort insbesondere auf den Seiten 505 bis 557. Eine spezielle Gattung dieser Filter sind die sogenannten Wellendigitalfilter. Solche Schaltungen sind beispielsweise in der Deutschen Patentschrift Nr. 2 027 303 bzw. auch in der Zeitschrift «AEÜ», Band 25 (1971), Seiten 79 bis 89, beschrieben. Wellendigitalfilter haben den Vorteil, dass analoge Referenzfilter unmittelbar digital nachgebildet werden können.

Wie bereits erwähnt, wird in dem eingangs genannten Aufsatz NTG-Fachberichte, Seiten 81 bis 88, die Quadraturamplitudenmodulation analog durchgeführt.

Aufgabe der Erfindung ist es, Möglichkeiten anzugeben, nach denen unter Verwendung von spektrumformenden digitalen Filtern auch alle weiteren Verfahrensschritte digital durchführbar sind.

Bei Verfahren der einleitend genannten Art wird diese Aufgabe erfindungsgemäss nach den kennzeichnenden Merkmalen des Patentanspruches 1 gelöst.

Eine weitere vorteilhafte Ausgestaltung ist in dem Unteranspruch angegeben.

Anhand von Ausführungsbeispielen wird nachstehend die Erfindung noch näher erläutert. Es zeigen in der Zeichnung

Fig. 1 ein bekanntes Realisierungsschema zum besseren Verständnis,

Fig. 2a einen erfindungsgemässen QAM-Modulator mit Pulsformer,

Fig. 2b einen QAM-Modulator und Demodulator, bei dem Interpolator bzw. Dezimator, Multiplizierer zusammengezogen sind,

Fig. 3 in Abhängigkeit von der Frequenz $\omega$,

Fig. 3a das Basisbandspektrum nach dem Pulsformer,

Fig. 3b das Basisbandspektrum nach dem Interpolationsfilter,

Fig. 3c das Zwischenfrequenzspektrum (ZF-Spektrum) nach dem Multiplizierer und dem prinzipiellen Dämpfungsverlauf eines ZF-Nachfilters zur Korrektur der $\sin x/x$-Verzerrung des D/A-Wandlers und zur Unterdrückung der periodischen Fortsetzung des Spektrums.

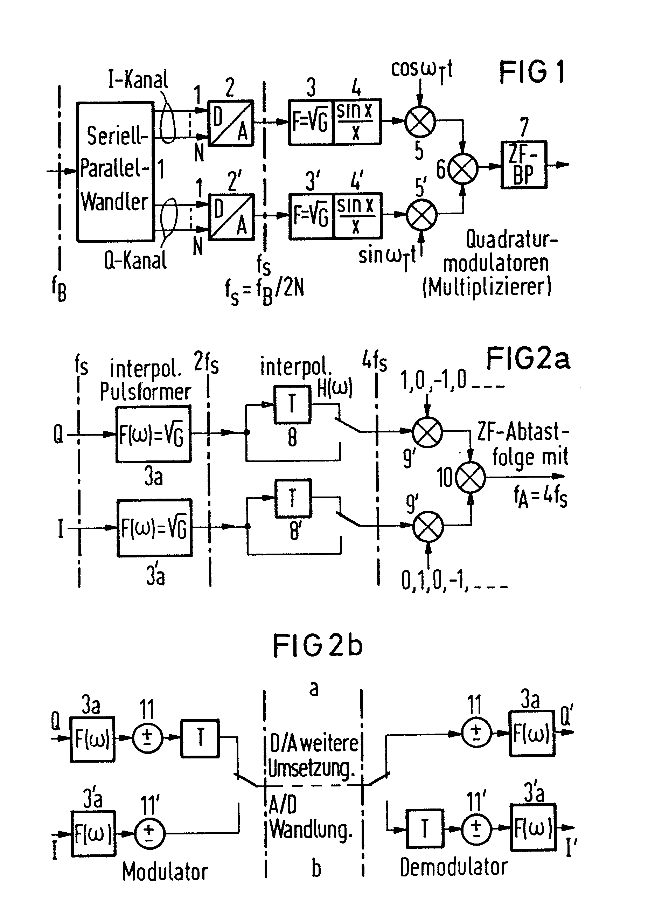

In Fig. 1 wird eine Bitfrequenz $f_B$ in einen Seriell Parallel Wandler 1 eingegeben. Es werden die Kanäle I und Q erzeugt, in denen jeweils Stufen 1 bis N angegeben sind. Im I-Kanal und im Q-Kanal schliessen sich die Digital-Analog-Wandler 2 bzw. 2' an, und es ist anschliessend die sogenannte Symbolfrequenz $f_S$ zu erkennen, wobei die Beziehung gilt $f_S = f_B/2N$ und $2_N$-stufige Signale im I- und Q-Kanal vorhanden sind. Es schliessen sich gleichartige Schaltungen zur Nyquist-Pulsformung an, die mit der Bezugsziffer 3 bzw. 3' versehen sind und die die Übertragungsfunktion $F = \sqrt{G}$ haben. Es folgen noch die $\sin x/x$-Entzerrer 4 und 4', so dass auch Halteverzerrungen des D/A-Wandlers aufgefangen werden können. Die Nyquist-Pulsformung erfolgt zu 50% im Modulator, und es sind diese Modulatoren im I-Kanal mit 5 und im Q-Kanal mit 5' bezeichnet, und es wird die 90°-Phasenverschiebung dieser beiden Kanäle durch Multiplikationsfaktoren cos $\omega_T \cdot T$ bzw. sin $\omega_T \cdot T$ erreicht. Die Quadraturmodulatoren 5 und 5' sind also Multiplizierer, und in einem anschliessenden Addierer werden die Kanäle I und Q wieder zusammengefasst und einem anschliessenden Zwischenfrequenzbandpass 7 zugeführt. Dieser ZF-Bandpass 7 siebt dann unerwünschte Modulationsprodukte aus. Die D/A-Wandler 2 bzw. 2' müssen bei einer Auflösung von N Bit eine erheblich höhere Genauigkeit, nämlich M = N + (4 ... 6) Bit, haben. Die Wandlungsrate ist dabei gleich der Symbolfrequenz $f_S$.

Beim herkömmlichen Quadraturmodulator mit Pulsformung nach Fig. 1 wird der serielle Bitstrom zuerst in zwei mehrstufige Symbolströme in einem Seriell-Parallel-Wandler 1 umgesetzt und anschliessend D/A-gewandelt (2, 2'). Die Auflösung dieser D/A-Wandler beträgt z.B. bei einem 16-QAM-Verfahren 2 Bit in jedem Quadraturkanal. Die Genauigkeit dieser Wandler muss jedoch erheblich grösser als die Auflösung (schätzungsweise um 4...6 Bit, d.h. um den Faktor 16...64) sein. Allgemein gilt folgendes:

Ein $2^{2N}$-Quam-Verfahren führt auf $2^N$-stufige Signale in den Quadraturkanälen I, 2 und auf eine N-Bit-Auflösung und eine M = (N+(...6)) Bit Genauigkeit des D/A-Wandlers. Anschliessend erfolgt die sendeseitige Pulsformung, die gemeinsam mit der identisch auf der Empfangsseite (Demodulator) vorzusehenden Pulsformung die Nyquistbedingung 1. Art erfüllt und somit die Intersymbolstörung verschwindet. Diese identische Aufteilung auf Modulator und Demodulator ist vom Standpunkt der Nachbarkanalbeeinflussung her optimal. In den sendeseitigen Pulsformer wird weiter eine sinx/x-Entzerrung 4, 4' mit einbezogen, um die Halteverzerrungen der D/A-Wandler auszugleichen.

An die darauffolgende Modulation (Multiplikation 5, 5') ist für die Trägerfrequenz ω folgende Forderung zu stellen:

$$\omega_T = 2\pi f_T \geqq (1+\varrho)\, 2\pi f_N,\ f_S = 2f_N. \qquad (1)$$

Dabei ist $\varrho$ der bekannte Roll-off-Faktor und $f_N$ die Nyquistfrequenz des Pulsformers.

Beim Übergang zu einem digitalen Konzept ist es aus Realisierbarkeitsgründen notwendig, den ZF-Träger so niedrig wie möglich unter Beachtung von Gleichung (1) zu wählen.

Nach der Zusammenführung der beiden Quadraturkanäle I und Q erfolgt die ZF-Selektion (Bandpass 7), um unerwünschte höhere Modulationsprodukte und Störlinien zu unterdrücken.

Der Demodulator geht unmittelbar aus dem Modulator durch Umkehrung der Signalflussrichtung hervor. Es entfällt dann der sinx/x-Entzerrer im Pulsformer. Hinzu kommt die Trägerrückgewinnung und die Taktrückgewinnung, die für die kohärente Demodulation und für die Regeneration der Symbole von Wichtigkeit sind. Üblicherweise ist beim konventionellen Realisierungsprinzip keine feste Relation zwischen Träger und Takt gegeben.

Beim Übergang zum digitalen Konzept liegt jedoch auch hier ein wesentlicher Unterschied: Die Abtastfrequenz am Eingang des Modulators (Multiplizierers) muss ein ganzzahliges Vielfaches sowohl der Symbolfrequenz $f_S$ als auch der Trägerfrequenz $f_T$ sein:

$$f_A = K_1 \cdot f_S = K_2 \cdot f_T,\ K_1, K_2 \in \mathbb{N}. \qquad (2)$$

Es wurde nur der Fall der Basisband-Pulsformung betrachtet, da er zur niedrigsten Arbeitsgeschwindigkeit bei einer digitalen Lösung führt.

In den Fig. 2a und 2b sind Schaltungsteile enthalten, die bereits anhand der Fig. 1 erläutert wurden. Es sind wiederum zu erkennen die Kanäle Q und I, mit 3a bzw. 3'a ist ein sogenannter interpolierender Pulsformer bezeichnet, dem sich in Fig. 2a ein Interpolator mit der Übertragungsfunktion H (ω) anschliesst. Diese Interpolatoren sind mit den Bezugsziffern 8 und 8' bezeichnet und sind durch Verzögerungsglieder T, deren Schalter nachgeschaltet sind, dargestellt. Es schliesst sich ein Multiplizierer an, der im Q-Kanal mit 9 bezeichnet ist und der die Signalfolge mit der Zahlenfolge 1, 0, –1, 0,... multipliziert, wenn im Kanal I der Multiplizierer 9' die Signalfolge mit der Zahlenfolge 0, 1, 0, –1 multipliziert.

In Fig. 2a ist durch gestrichelte Linien auch die Symbolfrequenz $f_S$ bzw. $2f_S$ bzw. $4f_S$ kenntlich gemacht, d.h. also an Stellen, an denen die Interpolation wirksam wird.

In Fig. 2b sind Interpolator und Dezimator zusammengezogen, und es ist die Anordnung für die Modulator- und Demodulatorseite gezeichnet. Mit der Bezugsziffer 11 bzw. 11' sind, wie dies ebenfalls symbolisch dargestellt ist, digitale Schaltungen bezeichnet, die eine Vorzeichenumkehr bewerkstelligen. Zwischen Modulator und Demodulator können, wie dies durch gestrichelte Linien ebenfalls angedeutet ist, die D/A-Wandlungen bzw. die A/D-Wandlungen und weitere Umsetzungen vorgenommen werden.

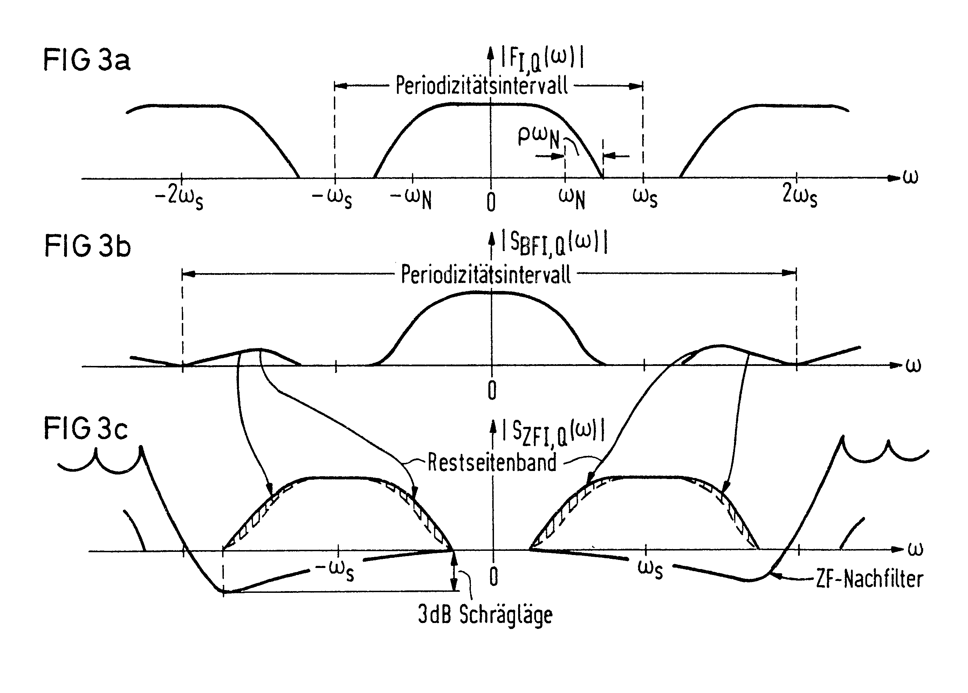

In Fig. 3a ist, wie eingangs schon erwähnt, das Basisbandspektrum nach dem Pulsformer in Abhängigkeit von der Frequenz ω gezeichnet, in Fig. 3b das Basisbandspektrum nach dem Interpolationsfilter. Die Periodizitätsintervalle sind ebenfalls kenntlich gemacht, und weitere Bezeichnungen werden nachstehend noch erläutert. In Fig. 3c ist das ZF-Spektrum nach dem Multiplizierer gezeichnet sowie ein prinzipieller Dämpfungsverlauf eines ZF-Nachfilters zur Korrektur der Sinus-x/x-Verzerrung des D/A-Wandlers und zur Unterdrückung der periodischen Fortsetzung des Spektrums.

Vorteilhaft ist es, wenn die Modulatoren 9, 9' vorangehenden spektrumformenden Filter die Nyquist-Bedingung erfüllende, interpolierende bzw. dezimierende Brückenwellendigitalfilter sind, die zugleich die Vorzeichenumkehr jedes zweiten Abtastwertes durchführen. Solche Brükkenwellendigitalfilter sind in der gleichzeitig eingereichten Patentanmeldung EP-A-0 123 278 beschrieben.

Zur weiteren allgemeinen Erläuterung für die Fig. 2a und 2b bzw. die Fig. 3 sei noch im Vergleich zu Fig. 1 auf folgendes hingewiesen:

Grundlegende Bedeutung kommt der Wahl der Konstanten $K_1$ und $K_2$ entsprechend (2) unter Beachtung von (1) zu. Darüber hinaus ist es vorteilhaft, wenn die Abtastwerte der sinusförmigen Trägerschwingung nur die Werte +1, 0 und –1 annehmen. Dies ist dann der Fall, wenn $K_2$ die Werte

$K_2 = 2, 3, 4$ oder 6

annimmt. Von diesen vier Möglichkeiten ist besonders $K_2 = 4$ ein ausgezeichneter Wert, da die entsprechenden Abtastfolgen für die beiden Trägerschwingungen

$\cos \omega_T nT$: 1, 0, –1, 0, 1, 0, –1, …
$\sin \omega_T nT$: 0, 1, 0, –1, 0, 1, 0, …
mit $T = 1/f_A$, $f_A = 4f_T$

zu jedem Abtastzeitpunkt nur einen von Null verschiedenen Abtastwert (+ oder –1) aufweist und damit die Zusammenführung der beiden Quadraturkanäle I, Q besonders einfach wird. Das bedeutet, dass die Quadraturmodulation durch einfaches wechselweises Ausblenden von jedem zweiten Abtastwert und Durchschalten bzw. Invertieren der verbleibenden Werte in den Quadraturkanälen und die Zusammenführung durch Verzahnen beider Abtastfolgen bewerkstelligt wird.

Um (1) für alle $\varrho \in [0, 1]$ einzuhalten, genügt es

$$f_S = f_T = \frac{1}{4} \cdot f_A$$

zu wählen, d.h. $K_1 = K_2 = 4$ und (2) ist ebenfalls erfüllt.

D.h. für die Modulatoren (Multiplizierer) müssen Abtastfolgen mit $f_A = 4 f_S$ angeliefert werden. Das bedeutet, dass die pulsformenden Filter interpolieren, d.h. die Abtrastrate um den Faktor 4 erhöhen müssen. Diese Interpolation soll zweckmässig in zwei Stufen um jeweils den Faktor 2 durchgeführt werden. Dabei wird im folgenden jeweils die Spektrums- bzw. Pulsformung vollständig in den ersten Teil der Abtastratenerhöhung (bzw. Absenkung, d.h. Dezimation im Demodulator) verlegt.

Der zweite Teil der Abtastratenänderung bezieht sich damit auf eine Folge, deren Spektrum bereits eine 50%ige Nyquistformung erfahren hat und soll mit möglichst geringem Aufwand die zur Modulation erforderliche Abtastrate von 4 $f_S$ herbeiführen. Wie im folgenden gezeigt, kann dies mit einer Art Restseitenbandmodulation für beide Quadraturkanäle besonders effizient durchgeführt werden.

Dazu verwendet man gemäss Fig. 2a ein Interpolationsfilter 8, 8' mit der Übertragungsfunktion

$$H(\omega) = 1 + e^{-j\omega T} = 2e^{-j\omega \frac{T}{2}} \cos \frac{\omega T}{2} \qquad (3)$$

an. Dann ergibt sich für das Basisbandspektrum am Multipliziererreingang im I-Kanal in Folge eines Symbols

$$S_{BF_I}(\omega) = 2e^{-j\omega \frac{T}{2}} \cos \frac{\omega T}{2} \cdot F_I(\omega). \qquad (4)$$

Entsprechendes gilt für den Q-Kanal. Für die ZF-Spektren vor der Zusammenführung ergibt sich

$$S_{ZF_I}(\omega) = \frac{1}{2} (S_{BF_I}[\omega - \omega_s] + S_{BF_I}[\omega + \omega_s])$$

$$S_{ZF_Q}(\omega) = \frac{1}{2j} (S_{BF_Q}[\omega - \omega_s] - S_{BF_Q}[\omega + \omega_s]). \qquad (5)$$

Gleichung (4) eingesetzt in (5) ergibt unter Benützung der Periodizität von $F_{I,Q}(\omega)$

$$F_{I,Q}(\omega) = F_{I,Q}(\omega + 2n\omega_s), \ n \in \mathbb{Z} \qquad (6)$$

Für die ZF-Spektren

$$S_{ZF_I} = F_I(\omega - \omega_s) \qquad (7)$$

$$S_{ZF_Q} = je^{-j(\omega - \omega_s)T} F_Q(\omega - \omega_s),$$

und es gilt

$$S_{ZF}(\omega) = S_{ZF_I}(\omega) + S_{ZF_Q}(\omega)$$
$$= F_I(\omega - \omega_s) + je^{-j(\omega - \omega_s)T} F_Q(\omega - \omega_s). \qquad (8)$$

Dieses Ergebnis zeigt, dass das ZF-Spektrum durch einfaches Verschieben des Spektrums am Pulsformerausgang (und evtl. Phasendrehung) entsteht und das Interpolationsfilter keine Verzerrungen verursacht, obwohl es nur einen cosförmigen Frequenzgang aufweist! Dies ist auf eine Art Restseitenbandmodulation zurückzuführen, wie dies in Fig. 3 anhand der Spektren wiedergegeben ist.

Zusätzlich ist in Fig. 3c der prinzipielle Frequenzgang eines zeitkontinuierlichen analogen ZF-Filters, das im Durchlassbereich die $\sin x/x$-Verzerrungen des D/A-Wandlers ausgleicht und im Sperrbereich die periodische Fortsetzung des Spektrums unterdrückt, dargestellt. Die $\sin x/x$-Kompensation kann evtl. auch in den Digitalteil vorgezogen werden.

Die hier für den Modulator gezeigte Ableitung gilt in voller Analogie für den Demodulator inklusive Dezimator.

**Patentansprüche**

1. Verfahren zur digitalen Quadraturamplitudenmodulation unter Verwendung von spektrumformenden digitalen Filtern, bei der Abtastfolgen aus zwei unter 90° aufeinander stehenden Trägerschwingungen zur Verfügung stehen und die Frequenz der beiden unter 90° aufeinander stehenden Trägerschwingungen ein Viertel der Abtastfrequenz ist und ihre Phasenlage relativ zu den Abtastzeitpunkten so gewählt ist, dass abwechselnd jeder zweite Abtastwert beider Trägerschwingungen Null ist, derart, dass zu jedem Taktzeitpunkt jeweils eine der beiden Trägerschwingungen Null ist, dadurch gekennzeichnet, dass in beiden Quadraturkanälen (I, Q) Signalabtastfolgen mit der halben Abtastfrequenz vorliegen und die Quadraturamplitudenmodulation lediglich durch zeitlich um eine Abtastperiode (T) versetztes Verschachteln (interleaving) dieser Folgen, die durch Vorzeichenumkehr jedes zweiten Abtastwertes aus den Signalabtastfolgen entstanden sind, erfolgt.

2. Verfahren nach Anspruch 1, dadurch gekennzeichnet, dass die den Modulatoren (9, 9′) vorangehenden spektrumformenden Filter (3a, 3′a) die Nyquistbedingung erfüllende interpolierende bzw. dezimierende Brückenwellendigitalfilter sind, die zugleich die Vorzeichenumkehr (11, 11′) jedes zweiten Abtastwertes durchführen.

**Claims**

1. A method of digital quadrature amplitude modulation using spectrum shaping digital filters, wherein sample sequences of two carrier oscillations, at 90° to one another, are available, where the frequency of the two carrier oscillations, at 90° to one another, is one quarter of the sampling frequency and where their phase position relative to the sampling times is selected to be such that every second sample value of both carrier oscillations is alternately zero, so that at every clock time one of the two carrier oscillations is respectively zero, characterised in that both quadrature channels (I, Q) contain signal sample sequences having half the sampling frequency, and the quadrature amplitude modulation takes place simply by interleaving – with a delay of one sampling period (T) – of these sequences which have been produced by reversing the sign of every second sample value of the signal sample sequences.

2. A method as claimed in claim 1, characterised in that the spectrum shaping filters (3a, 3′a) which precede the modulators (9, 9′) are interpolating and decimating bridge wave digital filters which fulfil the Nyquist condition and which simultaneously carry out the sign reversal (11, 11′) of every second sample value.

**Revendications**

1. Procédé pour la modulation numérique en amplitude et en quadrature, avec mise en œuvre de filtres numériques à formation de spectre, pour laquelle on dispose de trains de balayage formés de deux porteuses décalées entre elles de 90° alors que la fréquence des porteuses décalées entre elles de 90° est égale au quart de la fréquence de balayage et que leur relation de phase est choisie, aux instants de balayage, de telle façon que chaque seconde valeur de balayage des deux porteuses est nulle, et cela de manière qu'à chaque instant de la cadence l'une des deux porteuses est nulle, caractérisé par le fait que dans les deux canaux en quadrature (I, Q) se présentent des trains de signaux de balayage ayant la moitié de la fréquence de balayage et que la modulation en amplitude et en quadrature s'opère uniquement par une imbrication (interleaving), décalée dans le temps, d'une période de balayage (T) de ces trains qui ont été formés par une inversion de signe de chaque seconde valeur de balayage des trains des signaux de balayage.

2. Procédé selon la revendication 1, caractérisé par le fait que les filtres (3a, 3′a) formant le spectre, prévus en amont des modulateurs (9, 9′) sont des filtres numériques d'ondes en pont qui satisfont la condition de Nyquist, qui interpolent ou écrêtent, et qui réalisent simultanément l'inversion du signe de chaque seconde valeur de balayage.

FIG 1

FIG 2a

FIG 2b

FIG 3a

FIG 3b

FIG 3c